Europäisches Patentamt

European Patent Office

Office européen des brevets

(19)

(11) Numéro de publication: **0 336 786**
**B1**

(12) **FASCICULE DE BREVET EUROPEEN**

(45) Date de publication du fascicule du brevet: **30.01.91**

(51) Int. Cl.⁵: **B 60 R 13/06**

(21) Numéro de dépôt: **89400479.5**

(22) Date de dépôt: **21.02.89**

(54) **Joint d'étanchéité pour coffre de véhicule, notamment pour coffre d'automobile.**

(30) Priorité: **28.03.88 FR 8804031**

(43) Date de publication de la demande:
**11.10.89 Bulletin 89/41**

(45) Mention de la délivrance du brevet:
**30.01.91 Bulletin 91/05**

(84) Etats contractants désignés:
**BE DE ES GB IT SE**

(56) Documents cités:
**EP-A-0 300 736**
**DE-A-2 613 193**
**DE-U-8 620 972**
**FR-A-2 297 366**
**FR-A-2 579 152**
**GB-A-2 006 309**
**US-A-3 164 870**
**US-A-4 745 016**

(73) Titulaire: **ETABLISSEMENTS MESNEL SOCIETE ANONYME DITE :**
**9 et 11, Rue de la Rivière**
**F-78420 Carrières-Sur-Seine (FR)**

(72) Inventeur: **Mesnel, François**
**6, bis rue Salignac Fénelon**
**F-92200 Neuilly-sur-Seine (FR)**

(74) Mandataire: **Jolly, Jean-Pierre et al**
**Cabinet Jolly 54, rue de Clichy**
**F-75009 Paris (FR)**

Courier Press, Leamington Spa, England.

## Description

La présente invention concerne un nouveau joint d'étanchéité pour coffre de véhicule, notannent d'automobile. .

Les joints usuels utilisés dans ce but comprennent un élément à section en U, comportant habituellement une âme métallique enrobée d'un élastomère, qui pince la tranche supérieure de la cloison arrière du coffre ou une feuillure associée à cette cloison. De façon connue en soi, une ou plusieurs parties tubulaires, destinées à être pincées entre l'abattant du coffre et l'ossature de la carrosserie pour assurer l'étanchéité, sont solidaires de l'élément en U du joint, avec lequel elles sont assemblées par coextrusion. Une lèvre peut également être supportée par l'élément en U, parallèlement à la branche de celle-ci disposée à l'intérieur du coffre, afin de coiffer éventuellement une autre plaque de la structure du coffre ou de former un élément enjoliveur à l'intérieur du coffre.

Le maintien en position de l'élément à section en U sur la feuillure métallique de la cloison du coffre est assuré en prévoyant des lèvres en saillie sur les faces en vis-à-vis des branches du U, qui viennent en contact avec la feuillure et sont comprimées contre celle-ci (voir, par exemple, DE—U—86 20972.8). A l'usage, cependant, ce mode de fixation peut se révéler instable et il serait souhaitable de disposer d'un joint d'étanchéité de ce type qui soit plus fiable que ceux de la technique connue et qui assure une fixation parfaitement stable sur l'ossature du coffre, même après de longues périodes d'utilisation.

C'est ce problème que se propose de résoudre la présente invention en équipant la partie en U du joint d'un organe mobile rigide, apte à s'effacer à l'encontre d'une force élastique de rappel, lorsque l'on met cette partie à section en U en position sur la feuillure de l'ossature du coffre, pour être sollicitée par la dite force de rappel contre une face de cette feuillure.

A cet effet, l'invention a pour objet un joint d'étanchéité pour coffre de véhicule, du type comprenant un élément en forme de canal à section en U, comprenant une âme métallique gainée d'un élastomère, cet élément en U étant destiné à coiffer la tranche d'une feuillure de l'ossature du coffre (Joint du type divulgué, par exemple, par DE—U—8620972.8), caractérisé en ce qu'à l'extrémité de l'une des branches du U est montée pivotante une bande en élastomère ou en matière plastique, à armature métallique, sensiblement rigide, apte à s'escamoter par pivotement pour laisser le passage à la dite feuillure lors de la mise en place du dit élément à section en U sur cette cloison, cette bande comportant une partie ou un élément tourné vers la face interne de la même branche du U, qui est apte à prendre appui contre cette face en se déformant élastiquement pour solliciter la dite bande en sens inverse, de façon telle qu'en position montée de la dite partie en U sur la dite feuillure, la dite bande soit sollicitée latéralement en appui contre une face de la dite feuillure.

Aux lèvres en élastomère habituellement prévues sur la face interne des branches du U, l'invention propose donc de substituer, pour l'une de ces branches, une bande rigide, qui prend appui à la manière d'un levier sollicité par un ressort de rappel contre la feuillure de l'ossature du coffre, en assurant ainsi un pincement beaucoup plus ferme de la tranche de la feuillure.

La dite bande comprendra un talon formé par l'élastomère qui gaine également l'armature métallique de l'élément à section en U et qui servira d'articulation de pivotement pour la dite bande.

La partie de cette bande qui prend appui élastiquement contre la face correspondante d'une branche de l'élément en U pourra être une simple partie du bord de cette bande recourbée en direction de la branche du U. Le bord opposé de la bande pourra présenter un bec dirigé vers la cloison de coffre, en vue de prendre appui contre cette cloison, en position montée du joint sur celle-ci, afin d'assurer l'étanchéité du joint.

De façon connue en soi, la branche du U sur laquelle n'est pas articulée la dite bande comporte une ou des lèvres en un élastomère ou en une matière plastique qui, en position montée du joint sur la feuillure de la cloison du coffre, seront aplaties et comprimées entre la dite feuillure et la branche du U. Des lèvres en élastomère ou en matière synthétique pourront également être prévues sur la face de la dite bande tournée vers la dite feuillure.

D'autres caractéristiques et avantages de l'invention apparaîtront dans la description détaillée qui va suivre d'une forme de réalisation, donnée à titre d'exemple non limitatif, en référence aux dessins annexés. Sur ces dessins:

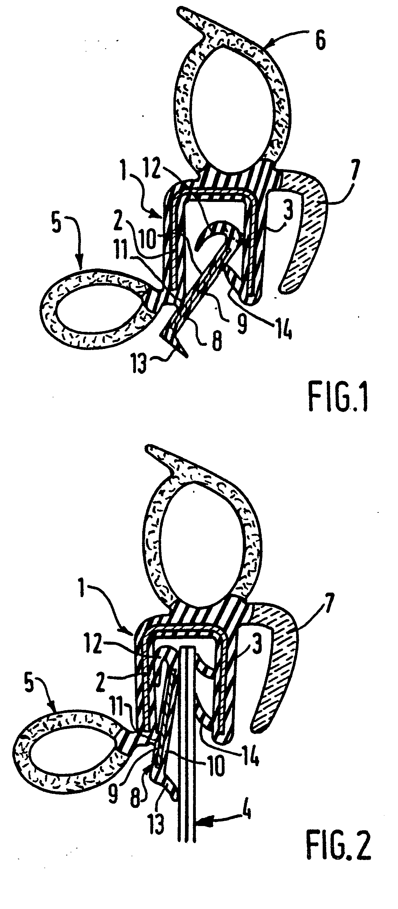

La figure 1 est une coupe transversale du joint conforme à l'invention;

La figure 2 est une coupe analogue à la figure 1 du joint en position montée sur un coffre d'automobile.

Comme on le voit sur ces dessins, le joint pour coffre d'automobile conforme à l'invention comprend, de façon connue, un profilé 1 en forme de canal en U, qui comporte une armature métallique 2, gainée d'un élastomère 3 et destinée à coiffer une feuillure 4 de l'armature du coffre. Dans la forme de réalisation représentée, deux éléments tubulaires 5 et 6, dits "bulbes" dans la technique, sont attenants au profilé 1 et sont destinés à être comprimés entre l'abattant du coffre et l'ossature de la carrosserie pour assurer l'étanchéité. Une lèvre 7, attenante à la base du profilé à section en U et sensiblement parallèle à celui-ci forme enjoliveur et dissimule le profilé en U. Elle permet aussi de coiffer éventuellement des habillages plastiques ou une seconde plaque métallique.

Conformément à l'invention, une bande rigide 8, comprenant par exemple une armature métallique 9 enrobée de caoutchouc vulcanisé 10, fixé mécaniquement (en ménageant des découpes ou des trous dans l'armature métallique) ou chimiquement (en utilisant un agent de collage), est montée pivotante par rapport à l'extrémité de l'une des branches de l'élément à section en U, en l'occurrence celle qui est à l'extérieur du coffre. A cet effet, une charnière 11 en élastomère réunit la bande 8 et le profilé 1, au voisinage de l'extrémité de sa branche externe. La bande 8 peut ainsi s'escamoter en pivotant, lorsque l'on met le profilé en position sur la feuillure 4, pour venir prendre appui contre la face correspondante de la branche externe du U, par une partie recourbée 12, ménagée le long du bord de la bande 8 disposé entre les branches du profilé 1. En s'appuyant contre le profilé, cette partie 12 se déforme élastquement et exerce un effet de ressort sur la bande 8, qui est ainsi appuyée fortement contre la feuillure 4 et la branche correspondante du U. Un bec 13, ménagé sur le bord extérieur de la bande 1, prend appui contre la feuillure 4 et assure l'étanchéité du profilé.

De façon connue, la branche du U disposée à l'intérieur du coffre est équipée, sur sa face tournée vers la feuillure 4, de lèvres 14, recourbées vers la base du U, qui contribuent de la manière usuelle au maintien en position du profilé.

La partie recourbée 12 de la bande 8 peut être remplacée par tout élément apte à exercer un effort élastique de rappel, par exemple par un tube ou par un jonc collé sur la face de la bande 8 tournée vers la branche correspondante du profilé.

La bande 8 peut naturellement comporter, sur sa face en contact avec la feuillure, des lèvres analogues aux lèvres 14 et ayant la même fonction.

Il est clair que le joint conforme à l'invention est beaucoup plus stable en position montée sur la feuillure 4 que les joints de la technique antérieure, dans lesquels seules des lèvres faisant saillie sur les faces qui se font vis-à-vis du profilé en U assurent le maintien en position du joint.

## Revendications

1. Joint d'étanchéité pour coffre de véhicule, du type comprenant un élément (1) en forme de canal à section en U, comprenant une âme métallique (2) gainée d'un élastomère (3), cet élément en U étant destiné à coiffer la tranche d'une feuillure (4) de l'ossature du coffre, caractérisé en ce qu'à l'extrémité de l'une des branches du U est montée pivotante une bande (8) en élastomère ou en matière plastique à armature métallique (9) sensiblement rigide, apte à s'escamoter par pivotement pour laisser le passage à la dite feuillure (4) lors de la mise en place du dit élément (1) à section en U sur cette cloison, cette bande comportant une partie (12) ou un élément tourné vers la face interne de la même branche du U, qui est apte à prendre appui contre cette face en se déformant élastiquement pour solliciter la dite bande (8) en sens inverse, de façon telle qu'en position montée de la dite partie en U sur la dite feuillure, la dite bande (8) soit sollicitée latéralement en appui contre une face de la dite feuillure.

2. Joint selon la revendication 1, caractérisé en ce que la dite bande (8) est articulée sur la dite branche de l'élément à section en U par une charnière (11) en élastomère.

3. Joint selon l'une des revendications, 1 et 2, caractérisé en ce que la dite bande (9) prend appui contre une branche du dit élément (1) à section en U par une partie recourbée en direction de cette bande.

4. Joint selon l'une des revendications 1 à 3, caractérisé en ce que la dite bande 8 comprend, sur son bord opposé à la partie ou à l'élément par lequel elle prend appui contre la branche de l'élément (1) à section en U, un bec dirigé vers la dite feuillure (4).

5. Joint selon l'une des revendications 1 à 4, caractérisé en ce que la branche de l'élément (1) à section en U sur laquelle n'est pas articulée la dite bande (8) comporte des lèvres (14) recourbées en direction du fond de l'élément (1) à section en U.

6. Joint selon l'une des revendications 1 à 5, caractérisé en ce que la dite bande comporte, sur la face par laquelle elle vient en contact avec la dite feuillure (4), des lèvres recourbées en direction du fond de l'élément (1) à section en U.

## Patentansprüche

1. Dichtungsstreifen für einen Fahrzeug-Kofferraum, der Art, die ein Element (1) in Form eines Kanals mit U-förmigen Querschnitt aufweist, mit einer metallischen Bewehrung (2), die von einem Elastomer (3) umhüllt ist, wobei das U-förmige Element dazu bestimmt ist, einen Teil eines Falzes (4) des Kofferraums zu bedecken, dadurch gekennzeichnet, daß an dem äußeren Ende eines der Schenkel des U schwenkbeweglich ein band (8) aus Elastomer oder einem Kunststoffmaterial mit metallischer, im wesentlichen fester Armierung (9) gelagert ist, das dafür geeignet ist, durch Schwenkbewegung zu verschwinden, um eine Eintrittsöffnung für den besagten Falz (4) zu belassen, sobald das U-förmige Element (1) auf diesem Abteil positioniert wird, wobei das Band einen Teil (12) oder ein Element aufweist, das der inneren Fläche des gleichen Schenkels des U zugewandt ist und geeignet ist, dieser Fläche Halt zu bieten, während es sich elastisch verformt, um das Band (8) im umgekehrten Sinne einschwenken zu lassen, derart, daß in der Lagerstellung des U-förmigen Abschnitts auf dem besagten Falz das besagte band (8) seitlich drücken möge und gegen die Oberfläche des Falzes eine Stütze bietet.

2. Dichtungsstreifen nach Anspruch 1, dadurch gekennzeichnet, daß das besagte Band (8) gelenkförmig auf dem besagten Schenkel des U-förmigen Elements durch ein Scharnier (11) aus Elastomer verbunden ist.

3. Dichtungsstreifen nach einem der Ansprüche 1 oder 2, dadurch gekennzeichnet, daß das besagte Band (9) an einem Schenkel des U-förmigen Elements über einen Abschnitt abgestützt ist, der in Richtung des Bandes zurückgebogen ist.

4. Dichtungsstreifen nach einem der Ansprüche 1 bis 3, dadurch gekennzeichnet, daß das Band (8) an der Seite gegenüberliegend dem Abschnitt oder dem Element, durch welches es gegen den Schenkel des U-förmigen Elements (1) abgestützt ist, eine Zunge aufweist, die zu dem Falz (4) gerichtet ist.

5. Dichtungsstreifen nach einem der Ansprüche 1 bis 4, dadurch gekennzeichnet, daß der Schenkel des U-förmigen Elements (1), auf welchem das band (8) nicht gelenkig gelagert ist, Lippen (14) aufweist, die in Richtung des Grundes des U-förmigen Elements (1) zurückgebogen sind.

6. Dichtungsstreifen nach einem der Ansprüche 1 bis 5, dadurch gekennzeichnet, daß das Band auf der Oberfläche, über welches es in Anlage mit dem Falz (4) kommt, Lippen aufweist, die in Richtung des Grundes des U-förmigen Elements (1) zurückgebogen sind.

**Claims**

1. A sealing member for a vehicle boot, of the type comprising an element (1) in the form of a channel of U-shaped cross-section, comprising a metal core (2) sheathed with an elastomer (3), said U-shaped element being intended to fit over the edge of a rib (4) of the frame structure of the boot, characterised in that pivotally mounted at the end of one of the limbs of the U-shape is a strip (8) of elastomer or of plastics material with a substantially rigid metal reinforcement (9), which is capable of moving aside by pivotal motion to allow said rib (4) to pass in the operation of setting said U-section element (1) in position on said wall portion, said strip comprising a part (12) or an element directed towards the inside face of the same limb of the U-shap, which is capable of bearing against said face with resilient deformation to urge said strip (8) in the opposite direction, in such a way that in the mounted position of said U-shaped part on said rib said strip (8) is urged laterally to bear against a face of said rib.

2. A sealing member according to claim 1 characterised in that said strip (8) is pivoted to said limb of the U-section element by a hinge (11) of elastomer.

3. A sealing member according to one of claims 1 and 2 characterised in that said strip (9) bears against a limb of said U-section element (1) by way of a portion which is curved in the direction of said strip.

4. A sealing member according to one of claims 1 to 3 characterised in that said strip (8) comprises, on its edge which is opposite to the part or to the element by way of which it bears against the limb of the U-section element (1), a projection which is directed towards said rib (4).

5. A sealing member according to one of claims 1 to 4 characterised in that the limb of the U-section element (1) on which said strip (8) is not pivoted comprises lips (14) which are curved back towards the bottom of the U-section element (1).

6. A sealing member according to one of claims 1 to 5 characterised in that on the face by way of which it comes into contact with said rib (4), said strip comprises lips which are curved back in the direction of the bottom of the U-section element (1).

FIG.1

FIG.2